# EUROPÄISCHE PATENTSCHRIFT

(11) **EP 1 049 236 B1**
(45) Veröffentlichungstag und Bekanntmachung des Hinweises auf die Patenterteilung: **31.05.2006**
(21) Anmeldenummer: 00810297.2
(22) Anmeldetag: 05.04.2000
(51) Int. Cl.: H02K 15/04

(54) **Vorrichtung und Verfahren zum Biegen von Wicklungsstäben**
Method and device for bending winding bars
Procédé et dispositif pour plier des barres d'enroulement

(30) Priorität: 26.04.1999 DE 19918854
(43) Veröffentlichungstag der Anmeldung: 02.11.2000
(73) Patentinhaber: Alstom Technology Ltd, 5400 Baden (CH)
(72) Erfinder: Kleinburger, Johann, 8181 Höri (CH); Hauri, felix, 5413 Birmenstorf (CH)

(56) Entgegenhaltungen:
- PATENT ABSTRACTS OF JAPAN vol. 018, no. 667 (E-1645), 15. Dezember 1994 (1994-12-15) -& JP 06 261505 A (TOSHIBA CORP), 16. September 1994 (1994-09-16)
- PATENT ABSTRACTS OF JAPAN vol. 010, no. 329 (E-452), 8. November 1986 (1986-11-08) -& JP 61 135349 A (HITACHI LTD), 23. Juni 1986 (1986-06-23)
- PATENT ABSTRACTS OF JAPAN vol. 009, no. 248 (E-347), 4. Oktober 1985 (1985-10-04) -& JP 60 098843 A (TOSHIBA KK), 1. Juni 1985 (1985-06-01)

## Beschreibung

### Technisches Gebiet

Die Erfindung bezieht sich auf Gebiet der Turbogeneratoren. Insbesondere bezieht sich die Erfindung auf eine Vorrichtung und ein Verfahren zum Biegen von Wicklungsstäben für die Rotorwicklung von Turbogeneratoren.

### Stand der Technik

Rotorwicklungen für Turbogeneratoren werden herkömmlich in der Regel aus Weichkupfer hergestellt, um ein Biegen der Leiter zu ermöglichen. Vor allem bei kleineren Generatoren werden für die Rotorwicklung Pakete aus Weichkupferleiterstäben verwendet, die anschliessend bündelweise in die gewünschte Form gebogen werden.

Bei grossen Generatoren besteht jedoch das Problem, dass Rotorwicklungen aus Weichkupfer aufgrund der hohen Fliehkräfte verschoben und deformiert werden und daher nicht mehr als Material geeignet sind. Daher wurden die Weichkupferleiterstäbe durch Hartkupferleiterstäbe ersetzt. Bei diesen Hartkuperleiterstäben war nun aber das Problem zu lösen, wie die benötigte Krümmung dieser Leiterstäbe zur Herstellung von Rotorwicklungen zu erreichen ist.

Daher versuchte man zunächst eine analoge Umsetzung des Biegens von Bündeln von Weichkupferleiterstäben auf Hartkupferleiterstäbe. Bei einem Biegen von Bündeln aus Hartkupferleiterstäben traten jedoch Probleme auf. Aufgrund unterschiedlichen Zurückfederns der einzelnen Hartkupferleiterstäbe nach dem Biegen - im Gegensatz zu den herkömmlichen Weichkupferleiterstäben - war es nicht möglich, ein kompaktes Bündel in eine gewünschte Form zu biegen. Durch dieses unterschiedliche Rückfedern der einzelnen Hartkupferleiterstäbe entstand somit das Erfordernis eines wiederholten Nachbearbeitens, respektive Nachbiegens der einzelnen Hartkupferleiterstäbe, bis endlich ein Bündel in der gewünschten Form erhalten wird. Jedoch wäre ein derartiges Verfahren bei weitem zu aufwendig für die Herstellung von Rotorwicklungen und damit zu kostenintensiv. Ausserdem ist es aufgrund des verschiedenen Verhaltens der einzelnen Hartkupferleiterstäbe schwierig, eine geforderte Genauigkeit zuverlässig einzuhalten.

Daher wird derzeit im Stand der Technik ein Kompromiss zur Verbesserung der Stabilität eingegangen. Es werden nämlich einzelne Rotorwicklungen zum Erhalten von Krümmungen aus Hartkupferleiterstabteilen zusammengesetzt, um eine grössere Stabilität der Rotorwicklungen gegenüber Fliehkräften zu erreichen. Diese Hartkupferleiterstabteile werden dabei mittels einer Ecklötung, an der die grösste axiale Beanspruchung durch thermische Dehnung stattfindet, verbunden, um die für die Rotorwicklung erforderliche Krümmung zu erreichen.

Jedoch wird bei dieser Ecklötung das Hartkupfer im Bereich der Lötstelle durch das Erwärmen beim Lötvorgang zu Weichkupfer. Demzufolge entstehen in den Bereichen der Lötstellen weiche Bereiche, in denen die Rotorwicklungen daher eine geringere Stabilität gegenüber Fliehkräften aufweisen, auch wenn diese Struktur verglichen mit herkömmlichen Weichkupferleiterstäben stabiler ist. Zudem ist die Durchführung der Ecklötungen aufwendig.

Eine Vorrichtung und ein Verfahren zum Biegen von Hartkupferleiterstäben für eine Rotorwicklung eines Turbogenerators oder-motors entsprechend dem Stand der Technik ist in der J-P-A-06261505 und JP-A-61135349 beschrieben.

### Darstellung der Erfindung

Daher ist es Aufgabe der vorliegenden Erfindung eine Vorrichtung und ein Verfahren zum einfachen und zuverlässigen Biegen von Hartkupferleiterstäben für Rotorwicklungen auszubilden, so dass das Erfordernis einer Zusammensetzung der Krümmungen aus einzelnen Hartkuperleiterstabteilen mittels Lötens nicht mehr besteht und dadurch eine Erweichung einzelner Stabbereiche durch Erwärmung beim Lötvorgang vermieden werden kann.

Erfindungsgemäss wird diese Aufgabe durch die in Anspruch 1 und 9 angegebenen Merkmale gelöst. Vorteilhafte Weiterbildungen der Erfindung sind in den Unteransprüchen angegeben.

Somit kann mit der erfindungsgemässen Vorrichtung und dem erfindungsgemässen Verfahren auf einfache Weise eine Rotorwicklung aus Hartkupferleiterstäben hergestellt und damit eine erhöhte Stabilität der Rotorwicklung gegenüber mechanischen und thermischen Belastungen, wie beispielsweise Fliehkräften, in allen Bereichen erreicht werden.

### Kurze Beschreibung der Zeichnung

Nachfolgend wird die Erfindung anhand von in der Zeichnung dargestellten Ausführungsformen näher erläutert.

### Es zeigen:

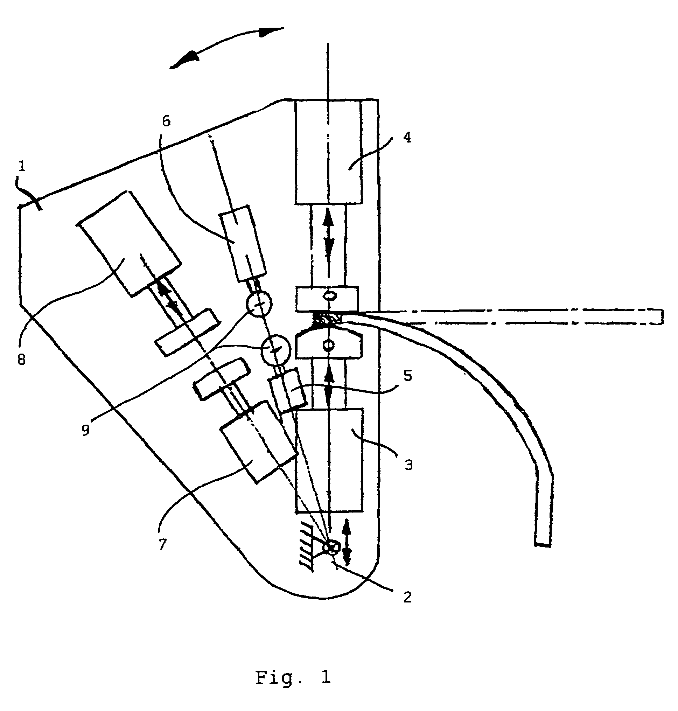

Fig. 1 eine Darstellung einer erfindungsgemässen Biegevorrichtung für Hartkupferleiterstäbe und

Fig.en 2a und 2b zwei erfindungsgemässe Modifikationen der in Fig. 1 veranschaulichten Biegevorrichtung.

### Weg(e) zur Ausführung der Erfindung

Insbesondere soll mit dem erfindungsgemässen Verfahren und der erfindungsgemässen Vorrichtung erreicht werden, dass Rotorwicklungen jeweils aus Hartkupferleiterstäben gebogen werden können und dabei Parameter, wie beispielsweise Radius, Anzahl der Leiter, Anzahl der Profile, Schenkellänge sowie unterschiedliche Kupferhärte gut beherrschbar sind.

Durch das erfindungsgemässe Verfahren und die erfindungsgemässe Vorrichtung wird nun erreicht, dass neue bzw. anders geformte Kupferprofile für einen neuen Generatortyp oder eine Retrofitwicklung - unabhängig davon, ob es sich dabei um Hart- oder Weichkupfer handelt -, die herkömmliche hohe Kosten für neue Biegewerkzeuge erforderten, nun schnell und kostengünstig fast ohne zusätzliche Werkzeugkosten angeboten werden können.

Im folgenden wird zunächst der Aufbau einer erfindungsgemässen Vorrichtung zum Biegen von Hartkupferleiterstäben unter Bezugnahme auf Fig. 1 beschrieben.

Fig. 1 zeigt eine schematische Darstellung einer erfindungsgemässen Biegevorrichtung für Hartkupferleiterstäbe.

Die Biegevorrichtung umfasst einen Schwenkarm 1, der einen je nach Biegeradius verschiebbaren Drehpunkt 2 aufweist. Weiterhin sind an einer Seite des Schwenkarms 1 parallel zu dieser Seitenfläche ein innerer und ein äusserer Biegezylinder 3 und 4 ausgebildet, zwischen die ein zu biegender Hartkupferleiterstab zum Biegen einführbar ist. Dabei besitzt der äussere Biegezylinder 4 zum einzuschiebenden Hartkuperleiterstab hin eine Biegebacke mit einer ebenen Oberfläche, während der innere Biegezylinder 3 zum Hartkupferleiterstab hin eine Formbacke mit einer gekrümmten Oberfläche aufweist, über die der Hartkupferleiterstab gebogen wird. Die gekrümmte Oberfläche ist in diesem Ausführungsbeispiel bevorzugterweise in der Querschnittansicht kreisbogenförmig ausgestaltet. Die Oberflächen der Biege - und der Formbacke sind gegenüberliegend zueinander angeordnet, mit dem Spalt, in den der Hartkupferleiterstab einführbar ist, zwischen sich.

Nach dem Biegen wird der Hartkupferleiterstab zwischen der Formbacke des inneren Biegezylinders 3 und der Biegebacke des äusseren Biegezylinders 4 hindurch zur Mitte des Schwenkarms 1 in Richtung auf ein Paar von Messzylindern 5 und 6 hin vorgeschoben, so dass der Hartkupferleiterstab von einem in einem inneren und äusseren Messzylinder 5 und 6 gebildeten Messsystem 9 vermessen werden kann. Das Messsystem 9 ist ausgebildet, bei dieser Vermessung den erzielte Biegeradius des Hartkupferleiterstabs zu bestimmen und durch einen Vergleich mit vorgegebenen Werten des Biegeradius eine mögliche Abweichung davon zu ermitteln. Um eine zuverlässiges Biegen durch die Biegezylinder 3 und 4 sicherzustellen, wird der Hartkupferleiterstab nach Passieren der Messzylinder 5 und 6 mittels zweier (innerer und äusserer) Klemmzylinder 7 und 8, die parallel längs der gegenüberliegenden Seitenfläche des Schwenksarms 1 angeordnet sind, während jedes Biegeschritts und Messschritts festgeklemmt. Dabei wird der Hartkupferleiterstab mittels Bewegens zweier beweglicher Kontaktteile der inneren und äusseren Klemmzylinder 7 und 8 und Anpressens der Hartkupferleiterstab eingeklemmt.

Die inneren und äusseren Biegezylinder 3 und 4, die inneren und äusseren Messzylinder 5 und 6 sowie die inneren und äusseren Klemmzylinder 7 und 8 sind jeweils auf einer vom Drehpunkt 2 des Schwenkarms 1 ausgehend gedachten radialen Linie angeordnet, so dass sich die jeweiligen Zylinder bei einem Biege- und Messvorgang auf einem Kreisbogenabschnitt befinden.

Fig.en 2a und 2b zeigen nun Modifikation der Biegevorrichtung gemäss Fig. 1. Hierbei wird ebenso ein Paar aus innerem und äusserem Biegezylinder 3' und 4' verwendet. Dabei umfasst der inneren Biegezylinder 3' eine Formbacke und der äussere Biegezylinder 4' eine Biegebacke, die jeweils zum Biegen jeweils in Kontakt mit dem Hartkupferleiterstab gebracht werden können. Im Unterschied zum vorhergehenden Ausführungsbeispiel ist in den modifizierten Ausführungsbeispielen in der Formbacke des inneren Biegezylinders 3' zusätzlich ein Messsystem 9' untergebracht. Dieses Messsystem 9' führt kontinuierlich eine Messung des mittels Biegens des Hartkupferleiterstabs über der Form- und Biegebacke der Biegezylinder 3' und 4' erzielten Biegeradius des Hartkupferleiterstabs durch. Es erfolgt ebenso wie im Messsystem 9 gemäss dem ersten Ausführungsbeispiel ein Vergleich zwischen den erhaltenen Messwerten und den Sollwerten, die einen vorbestimmten Biegeradius angeben.

Durch die Ausbildung des Messsystems 9' in der Formbacke des Biegezylinders 3' werden die im ersten Ausführungsbeispiel verwendeten Messzylinder 5 und 6 überflüssig. Anstelle davon wird nun ein zweites Paar von inneren und äusseren Klemmzylindern 5' und 6' ausgebildet, die zur Fixierung des Hartkupferleiterstabs während des Biegens dienen.

Der innere und äussere Biegezylinder 3' und 4' sind ausserdem zusammen mit dem Schwenkarm 1 um Drehpunkt 2 des Schwenkarms 1 entlang des zu biegenden Radius schwenkbar ausgebildet, um ein Biegen des Hartkupferleiterstabs über die Formbacke des inneren Biegezylinders 3' auf den gewünschten Radius durchführen zu können. Zudem ist die Biegebacke des äusseren Biegezylinders 4' im Gegensatz zum ersten Ausführungsbeispiel gegenüber der Formbacke des inneren Biegezylinders 3' versetzt zum Rand des Schwenkarms 1 hin angeordnet. Die Oberfläche der Formbacke des inneren Biegezylinders 3' weist dabei einen geraden Oberflächenbereich sowie dazu benachbart einen abgeschrägten Oberflächenbereich auf, wobei die Formbacke des äusseren Biegezylinders 4' gegenüberliegenden zu diesem abgeschrägten Oberflächenbereich angeordnet ist.

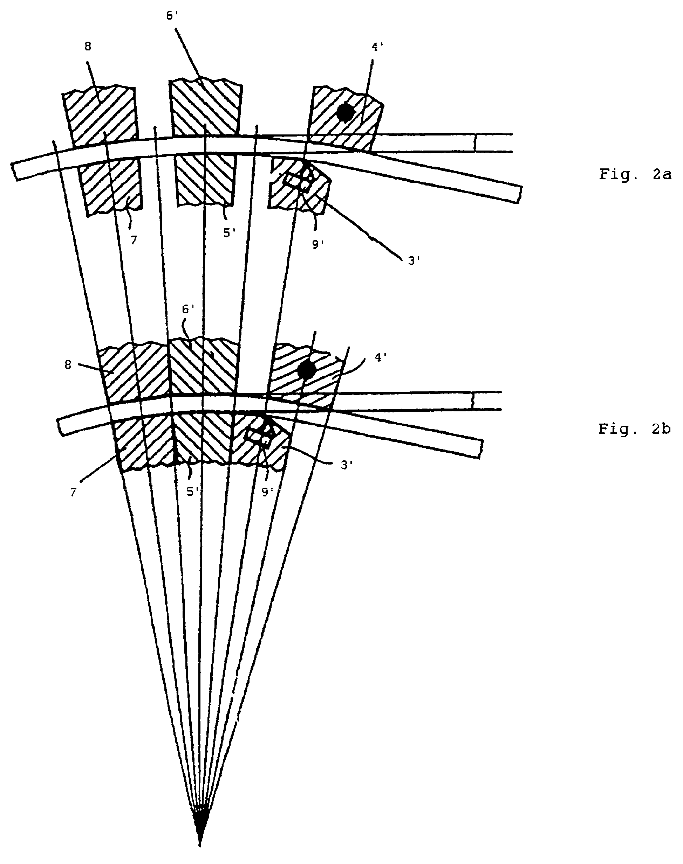

Wie in den in den Fig.en 2 dargestellten Ausführungsformen gezeigt, können die Paare von Zylindern untereinander um einen vorbestimmten Abstand beanstandet sein (Fig. 2a) oder auch in direktem seitlichen Kontakt miteinander stehen (Fig. 2b). Die letztere Anordnung kann für eine Herstellung eines kleinen Biegeradius vorteilhafter sein.

Im folgenden wird nun das zum Biegen der Hartkupferleiterstäbe verwendete Verfahren unter Bezugnahme auf die Fig.en 1, 2a und 2b genauer erläutert.

Das zum Biegen von Hartkupferleiterstäben verwendete erfindungsgemässe Verfahren umfasst die folgenden Schritte:
1) Einstellen des gewünschten Biegeradius
   Zuerst wird bei diesem Verfahren entsprechend dem gewünschten Biegeradius des Hartkupferleiterstabs der Drehpunkt 2 des Schwenkarms 1 in die zu diesem Biegeradius gehörige Position verschoben. Dadurch werden die Biegezylinder 3 und 4 bzw. 3' und 4' an die zum Erzielen des gewünschten Biegeradius erforderlichen Ausgangspositionen bewegt.
2) Biegen eines Leiterstabs aus Hartkupfer über Biegezylinder
   Anschliessend wird der zu biegende Hartkupferleiterstab in einen Spalt zwischen der Biegebacke des äusseren Biegezylinders 4 bzw. 4' und der Formbacke des inneren Biegezylinders 3 bzw. 3' eingebracht. Dabei wird der Hartkupferleiterstab in der in Fig. 1 veranschaulichten ersten Ausführungsform gerade so weit in den Spalt zwischen dem inneren und dem äusseren Biegezylinder 3 und 4 bzw. 3' und 4' eingeschoben, d.h. in den durch die Form- und die Biegebacke gebildeten Spalt geschoben, dass der in einem ersten Schritt zu biegende Bereich des Hartkupferleiterstabs mittig um die durch den inneren und den äusseren Biegezylinder 3 und 4 bzw. 3' und 4' gebildete Längsachse zu liegen kommt. Dann werden die Biegebacke des äusseren Biegezylinders 4 bzw. 4' sowie die Formbacke des inneren Biegezylinders 3 bzw. 3' in Kontakt mit der Oberfläche des Hartkupferleiterstabs gebracht und mit Druck beaufschlagt, um ein Biegen des Hartkupferleiterstabs entsprechend dem durch die Position des Drehpunkts 2 sowie die Krümmung der Formbacke des inneren Biegezylinders 3 vorgegebenen Radius zu erreichen.
3) Messung des erzielten Biegeradius des Hartkupferleiterstabs und Vergleich mit gewünschten Biegeradius
   Mittels eines entweder in einem Paar von Messzylindern 5 und 6 (Fig. 1) oder im inneren Biegezylinder 3' (Fig.en 2a und 2b) ausgebildeten Messsystems 9 bzw. 9' wird der Biegeradius des Hartkupferleiterstabs bestimmt. Bei Verwendung der Messzylinder 5 und 6 wird zuvor der Hartkupferleiterstab weiterbewegt, bis er zwischen den Messzylindern 5 und 6 zu liegen kommt. Im Messsystem 9 bzw. 9' wird der erzielte Biegeradius ermittelt und mit einem vorher im Messsystem 9 bzw. 9' eingespeicherten, gewünschten Biegeradius verglichen.
4) Anpassen des nächsten Biegeschritts des Hartkupferleiterstabs
   Im folgenden Schritt wird ansprechend auf das Vergleichsergebnis die Position des Drehpunktes 2 des Schwenkarms 1 derart angepasst, dass bei einem weiteren Biegeschritt, der in dem ein Biegen eines nachfolgenden Bereich des Hartkupferleiterstabs durchgeführt wird, eine Annäherung an den gewünschten Biegeradius, von dem bisher abgewichen wurde, erzielt werden kann. Diese Anpassung der Position des Drehpunktes 2 des Schwenkarms 1 so wie die Messung des erzielten Biegeradius erfolgt hierbei automatisch, ohne das Erfordernis eines Mitwirkens durch einen Bediener.
5) Wiederholen der vorstehenden Schritte über den Verlauf der gesamten Hartkupferleiterstabs in den zu biegenden Bereichen
   Die vorstehend beschriebenen Schritte des Biegevorgangs für den Hartkupferleiterstab werden fortlaufend wiederholt, bis der gewünschte Gesamtbiegeradius des Hartkupferleiterstabs erzielt wurde, d.h. der gesamte zu biegende Bereich wird schrittweise mittels der Formbacke des inneren Biegezylinders 3 bzw. 3' und der Biegebacke des äusseren Biegezylinders 4 bzw. 4' unter fortlaufender Überprüfung des Biegeradius gebogen.

Auf diese Weise kann mit der erfindungsgemässen Vorrichtung so wie dem erfindungsgemässen Verfahren auf einfache Weise ein Hartkupferleiterstab gebogen werden. Dabei besteht kein Erfordernis, eines Eingreifens durch eine Bedienperson, da automatisch fortwährend ein Vergleich des Sollwerts des Biegeradius mit dem erzielten Istwert erfolgt und bei Abweichungen durch eine sofortige Massnahme, beispielsweise eine Anpassung des Drehpunktes 2 des Schwenkarms 1, eine Korrektur vorgenommen wird. Dadurch ist auch jederzeit eine Anpassung entsprechend verschiedenen Materialhärten sowie ansprechend auf ein unterschiedliches Nachfedern bei verschiedenen Hartkupferleiterstäben, usw. auf einfache Weise möglich. Somit werden mittels des erfindungsgemässen Verfahrens sowie der erfindungsgemässen Vorrichtung entsprechend der erforderlichen Krümmung der Rotorwicklung gebogene Hartkupferleiterstäbe erhalten, die bei einem Zusammenfügen zur Herstellung der Rotorwicklung gut ineinanderliegen.

Zusammengefasst gesagt, bezieht sich die vorliegende Erfindung auf eine Vorrichtung und ein Verfahren zum Biegen von Hartkupferleiterstäben für Rotorwicklungen von Turbogeneratoren und -motoren. Durch dieses Verfahren kann eine Erwärmung und damit verbundene Umwandlung von Hartkupfer in Weichkupfer, die zu einer Verringerung der Stabilität gegenüber Fliehkräften führt, verhindert werden. Die Vorrichtung und das Verfahren ermöglichen ein automatisches, schrittweises Biegen von Hartkupferleiterstäben unter Erfassung des erzielten Biegeradius und Korrektur in Richtung auf den gewünschten Biegeradius. Dazu wird zunächst ein Hartkupferleiterstab mittels eines Paars von Biegezylindern auf einen zuvor eingestellten Biegeradius gebogen, der tatsächlich erzielte Biegeradius wird gemessen und es erfolgt eine Korrektur des im nächsten Schritt verwendeten Biegeradius, um eine Annäherung an den gewünschten Biegeradius zu erreichen.

## Patentansprüche

1. Vorrichtung zum Biegen von Hartkupferleiterstäben für Turbogeneratoren und -motoren, mit:
einem Schwenkarm (1), der einen verschiebbaren Drehpunkt (2) besitzt,
einem inneren und einem äusseren Biegezylinder (3, 4; 3', 4'), die auf dem Schwenkarm (1) angeordnet sind, wobei der äussere Biegezylinder (4; 4') eine Biegebacke und der inneren Biegezylinder (3; 3') eine Formbacke umfasst und zwischen die Biegebacke und die Formbacke ein Hartkupferleiterstab zum Biegen in einen vorbestimmten Biegeradius einführbar ist, einem Paar von Zylindern (5, 6; 5', 6'), die jeweils benachbart zu dem inneren und äusseren Biegezylinder (3, 4; 3', 4') angeordnet sind und zwischen denen der gebogene Hartkupferleiterstab einklemmbar ist,
einem Paar von Klemmzylindern (7, 8), die wiederum jeweils benachbart zu dem Paar von Zylindern (5, 6; 5', 6') angeordnet sind, zum Einklemmen des gebogenen Hartkupferleiterstabs,
einem Messsystem (9; 9') zum Messen eines Biegeradius des gebogenen Hartkupferleiterstabs und zur Ermittlung einer Abweichung vom vorbestimmten Biegeradius, und
eine Einrichtung zur Verschiebung des Drehpunkts (2) des Schwenkarms (1) ansprechend auf eine Abweichung vom vorbestimmten Biegeradius, wobei die drei Zylinderpaare (3, 4, 5, 6, 7, 8; 3', 4', 5', 6', 7, 8) jeweils auf einer sich radial vom dem Drehpunkt (2) nach aussen erstreckenden Linie angeordnet sind und jeweils die entsprechenden inneren bzw. äusseren Zylinder auf einem Kreisbogen liegen.

2. Vorrichtung nach Anspruch 1, **dadurch gekennzeichnet, dass**
das Messsystem (9) in dem Paar von Zylindern (5, 6) angeordnet ist.

3. Vorrichtung nach Anspruch 1, **dadurch gekennzeichnet, dass**
das Messsystem (9') in zumindest einem der Biegezylinder (3', 4') angeordnet ist und das Paar von Zylindern (5', 6') als zweites Paar von Klemmzylindern dient.

4. Vorrichtung nach Anspruch 3, **dadurch gekennzeichnet, dass**
das Messsystem (9') im inneren Biegezylinder (3') angeordnet ist.

5. Vorrichtung nach Anspruch 4, **dadurch gekennzeichnet, dass**
das Messsystem (9') in einer Formbacke des inneren Biegezylinders (3') angeordnet ist.

6. Vorrichtung nach einem der Ansprüche 1 bis 5, **dadurch gekennzeichnet, dass**
der äussere Biegezylinder (4; 4') eine Biegebacke umfasst, die auf der dem inneren Biegezylinder (3; 3') zugewandten Seite eine plane Oberfläche besitzt.

7. Vorrichtung nach einem der Ansprüche 1 bis 5, **dadurch gekennzeichnet, dass**
der innere Biegezylinder (3) eine Formbacke umfasst, die auf der dem äusseren Biegezylinder (4) zugewandten Seite im Querschnitt kreisbogenförmige Oberfläche besitzt, über die der Hartkupferleiterstab biegbar ist, und
der äussere Biegezylinder (4) eine Biegebacke umfasst, die auf der dem inneren Biegezylinder (3) zugewandten Seite eine plane Oberfläche besitzt, die direkt gegenüberliegend der im Querschnitt kreisbogenförmigen Oberfläche der Formbacke des inneren Biegezylinders (3) angeordnet ist.

8. Vorrichtung nach einem der Ansprüche 1 bis 5, **dadurch gekennzeichnet, dass**
der innere Biegezylinder (3') eine Formbacke umfasst, die auf der dem äusseren Biegezylinder (4') zugewandten Seite einen planen Oberflächenteil sowie einen vom äusseren Biegezylinder (4') weg abgeschrägten Oberflächenteil aufweist, und
der äussere Biegezylinder (4') eine Biegebacke umfasst, die auf der dem inneren Biegezylinder (3') zugewandten Seite eine plane Oberfläche besitzt, die direkt gegenüber dem abgeschrägten Oberflächenteil der Formbacke des inneren Biegezylinders (4') angeordnet ist.

9. Verfahren zum Biegen eines Hartkupferleiterstabs für eine Rotorwicklung
eines Turbogenerators oder -motors mit einer Vorrichtung nach einem der Ansprüche 1 bis 8, **gekennzeichnet durch** die Schritte
Einstellen eines gewünschten Biegeradius eines Hartkupferleiterstabs mittels entsprechendem Positionieren des Drehpunkts (2) des Schwenkarms (1), um so die inneren und äusseren Biegezylinder (3, 4; 3', 4') an die erforderliche Ausgangsposition zu bringen,
Biegen des Hartkupferleiterstabs, wobei der äussere Biegezylinder (4) mit Druck beaufschlagt wird und **dadurch** den Hartkupferleiterstab über den inneren Biegezylinder (3; 3') biegt,
Messen des erzielten Biegeradius des Hartkupferleiterstabs mittels des Messsystems (9; 9') und Vergleichen mit dem gewünschten Biegeradius, Verschieben des Drehpunktes (2) des Schwenkarms (1) ansprechend auf das Vergleichsergebnis, um den Biegeradius des Hartkupferleiterstabs in einem nächsten Biegeschritt an den gewünschten Biegeradius anzunähern,
Wiederholen der vorhergehenden Schritte, bis der Hartkupferleiterstab in dem erforderlichen Bereich mit dem gewünschten Biegeradius gebogen ist.

10. Verfahren nach Anspruch 9, **dadurch gekennzeichnet, dass**
das Biegen des Hartkupferleiterstabs, das Messen des erzielten Biegeradius sowie das Verschieben des Drehpunktes (2) des Schwenkarms (1) ansprechend auf das Vergleichsergebnis automatisch und ohne Eingreifen eines Bedieners erfolgt.

## Claims

1. An apparatus for bending hard-drawn copper conductor bars for turbo-generators and engines, having:
a swivel arm (1), which has a displaceable pivot point (2), an inner bending cylinder (3, 3') and an outer bending cylinder (4, 4'), which are arranged on the swivel arm (1), the outer bending cylinder (4; 4') comprising a bending jaw and the inner bending cylinder (3; 3') comprising a shaping jaw and it being possible for a hard-drawn copper conductor bar to be introduced between the bending jaw and the shaping jaw for bending to a predetermined bending radius,
a pair of cylinders (5, 6; 5', 6'), which are respectively arranged alongside the inner and outer bending cylinder (3, 4; 3', 4') and between which the bent hard-drawn copper conductor bar can be clamped in,
a pair of clamping cylinders (7, 8), which in turn are respectively arranged alongside the pair of cylinders (5, 6; 5', 6'), for clamping in the bent hard-drawn copper conductor bar,
a measuring system (9; 9') for measuring a bending radius of the bent hard-drawn copper conductor bar and for establishing a deviation from the predetermined bending radius, and
a device for displacing the pivot point (2) of the swivel arm (1) in response to a deviation from the predetermined bending radius, the three pairs of cylinders (3, 4, 5, 6, 7, 8; 3', 4', 5' , 6', 7, 8) being respectively arranged on a line extending radially outward from the pivot point (2) and the corresponding inner and outer cylinders respectively lying on an arc of a circle.

2. Apparatus according to Claim 1, **characterized in that** the measuring system (9) is arranged in the pair of cylinders (5, 6).

3. Apparatus according to Claim 1, **characterized in that** the measuring system (9') is arranged in at least one of the bending cylinders (3', 4') and the pair of cylinders (5', 6') serve as a second pair of clamping cylinders.

4. Apparatus according to Claim 3, **characterized in that** the measuring system (9') is arranged in the inner bending cylinder (3').

5. Apparatus according to Claim 4, **characterized in that** the measuring system (9') is arranged in a shaping jaw of the inner bending cylinder (3').

6. Apparatus according to one of Claims 1 to 5, **characterized in that** the outer bending cylinder (4; 4') comprises a bending jaw which has, on the side facing the inner bending cylinder (3; 3'), a planar surface.

7. Apparatus according to one of Claims 1 to 5, **characterized in that** the inner bending cylinder (3) comprises a shaping jaw which has, on the side facing the outer bending cylinder (4), a surface that is cross-sectionally in the form of an arc of a circle and over which the hard-drawn copper conductor bar can be bent, and the outer bending cylinder (4) comprises a bending jaw which has, on the side facing the inner bending cylinder (3), a planar surface which is arranged directly opposite the surface of the shaping jaw of the inner bending cylinder (3) that is cross-sectionally in the form of an arc of a circle.

8. Apparatus according to one of Claims 1 to 5, **characterized in that** the inner bending cylinder (3') comprises a shaping jaw which has, on the side facing the outer bending cylinder (4'), a planar surface part and a surface part bevelled away from the outer bending cylinder (4'), and the outer bending cylinder (4') comprises a bending jaw which has, on the side facing the inner bending cylinder (3'), a planar surface which is arranged directly opposite the bevelled surface part of the shaping jaw of the inner bending cylinder (4').

9. Method for bending a hard-drawn copper conductor bar for a rotor winding of a turbo-generator or engine with an apparatus according to one of Claims 1 to 8, **characterized by** the steps of
setting a desired bending radius of a hard-drawn copper conductor bar by means of corresponding positioning of the pivot point (2) of the swivel arm (1), in order in this way to bring the inner and outer bending cylinders (3, 4; 3', 4') to the required starting position,
bending the hard-drawn copper conductor bar, the outer bending cylinder (4) being subjected to pressure and, as a result, bending the hard-drawn copper conductor bar by means of the inner bending cylinder (3; 3'),
measuring the bending radius achieved of the hard-drawn copper conductor bar by means of the measuring system (9; 9') and comparing it with the desired bending radius,
displacing the pivot point (2) of the swivel arm (1) in response to the result of the comparison, in order to make the bending radius of the hard-drawn copper conductor bar approximate the desired bending radius in a next bending step,
repeating the preceding steps until the hard-drawn copper conductor bar is bent in the required region with the desired bending radius.

10. Method according to Claim 9, **characterized in that** the bending of the hard-drawn copper conductor bar, the measuring of the bending radius achieved and the displacing of the pivot point (2) of the swivel arm (1) in response to the result of the comparison take place automatically and without intervention by an operator.

## Revendications

1. Dispositif pour plier des barres conductrices en cuivre dur pour turbogénérateurs et turbomoteurs, comprenant:
un bras pivotant (1), qui possède un pivot déplaçable (2),
un cylindre de pliage intérieur et extérieur (3, 4 ; 3', 4'), qui sont disposés sur le bras pivotant (1), le cylindre de pliage extérieur (4 ; 4') comprenant une mâchoire de pliage et le cylindre de pliage intérieur (3; 3') comprenant une mâchoire de formage et une barre conductrice en cuivre dur pouvant être introduite en vue de son pliage à un rayon de courbure prédéfini entre la mâchoire de pliage et la mâchoire de formage,
une paire de cylindres (5, 6 ; 5', 6'), qui sont chacun disposés à côté du cylindre de pliage intérieur et extérieur (3, 4 ; 3', 4') et entre lesquels la barre conductrice en cuivre dur peut être serrée,
une paire de cylindres de serrage (7, 8) qui sont à leur tour disposés à côté de la paire de cylindres (5, 6 ; 5', 6'), pour le serrage de la barre conductrice en cuivre dur pliée,
un système de mesure (9; 9') pour mesurer un rayon de courbure de la barre conductrice en cuivre dur et pour déterminer un écart par rapport au rayon de courbure prédéfini, et
un dispositif pour déplacer le pivot (2) du bras pivotant (1) en réponse à un écart par rapport au rayon de courbure prédéterminé, les trois paires de cylindres (3, 4, 5, 6, 7, 8 ; 3', 4', 5', 6', 7, 8) étant à chaque fois disposées sur une ligne s'étendant radialement vers l'extérieur depuis le pivot (2) et les cylindres intérieurs, respectivement extérieurs correspondant se trouvant à chaque fois sur un arc de cercle.

2. Dispositif selon la revendication 1, **caractérisé en ce que** le système de mesure (9) est disposé dans la paire de cylindres (5, 6).

3. Dispositif selon la revendication 1, **caractérisé en ce que** le système de mesure (9) est disposé dans au moins l'un des cylindres de pliage (3', 4') et la paire de cylindres (5', 6') sert de deuxième paire de cylindres de serrage.

4. Dispositif selon la revendication 3, **caractérisé en ce que** le système de mesure (9') est disposé dans le cylindre de pliage intérieur (3').

5. Dispositif selon la revendication 4, **caractérisé en ce que** le système de mesure (9') est disposé dans une mâchoire de formage du cylindre de pliage intérieur (3').

6. Dispositif selon l'une quelconque des revendications 1 à 5, **caractérisé en ce que** le cylindre de pliage extérieur (4 ; 4') comprend une mâchoire de pliage qui possède une surface plane sur le côté tourné vers le cylindre de pliage intérieur (3 ; 3').

7. Dispositif selon l'une quelconque des revendications 1 à 5, **caractérisé en ce que** le cylindre de pliage intérieur (3) comprend une mâchoire de formage qui possède, du côté tourné vers le cylindre de pliage extérieur (4), une surface de section transversale en forme d'arc de cercle, par le biais de laquelle la barre conductrice en cuivre dur peut être pliée, et
le cylindre de pliage extérieur (4) comprend une mâchoire de pliage, qui possède du côté tourné vers le cylindre de pliage (3) une surface plane qui est disposée directement en regard de la surface de section transversale en forme d'arc de cercle de la mâchoire de formage du cylindre de pliage intérieur (3).

8. Dispositif selon l'une quelconque des revendications 1 à 5, **caractérisé en ce que**
le cylindre de pliage intérieur (3') comprend une mâchoire de formage qui présente, du côté tourné vers le cylindre de pliage extérieur (4') une partie de surface plane ainsi qu'une partie de surface biseautée à l'écart du cylindre de pliage extérieur (4'), et
le cylindre de pliage extérieur (4') comprend une mâchoire de pliage qui possède une surface plane du côté tourné vers le cylindre de pliage intérieur (3'), laquelle est disposée directement en regard de la partie de surface biseautée de la mâchoire de formage du cylindre de pliage intérieur (4').

9. Procédé pour plier une barre conductrice en cuivre dur pour un enroulement de rotor d'un turbogénérateur ou d'un turbomoteur comprenant un dispositif selon l'une quelconque des revendications 1 à 8, **caractérisé par** les étapes suivantes:
ajustage d'un rayon de courbure souhaité d'une barre conductrice en cuivre dur au moyen d'un positionnement correspondant du pivot (2) du bras pivotant (1) afin d'amener ainsi les cylindres de pliage intérieur et extérieur (3, 4 ; 3', 4') dans la position de départ requise,
pliage de la barre conductrice en cuivre dur, le cylindre de pliage extérieur (4) étant sollicité en pression et pliant de ce fait la barre conductrice en cuivre dur par le biais du cylindre de pliage intérieur (3 ; 3'),
mesure du rayon de courbure obtenu de la barre conductrice en cuivre dur au moyen du système de mesure (9 ; 9') et comparaison avec le rayon de courbure souhaité,
déplacement du pivot (2) du bras pivotant (1) en réponse au résultat de la comparaison, afin de rapprocher le rayon de courbure de la barre conductrice en cuivre dur du rayon de courbure souhaité, dans une étape de pliage suivante,
répétition des étapes précédentes jusqu'à ce que la barre conductrice en cuivre dur soit pliée dans la région requise au rayon de courbure souhaité.

10. Procédé selon la revendication 9, **caractérisé en ce que** le pliage de la barre conductrice en cuivre dur, la mesure du rayon de courbure obtenu ainsi que le déplacement du pivot (2) du bras pivotant (1) en réponse au résultat de la comparaison s'effectuent automatiquement et sans l'intervention d'un opérateur.
